# EUROPÄISCHE PATENTSCHRIFT

(11) **EP 3 744 706 B1**
(45) Veröffentlichungstag und Bekanntmachung des Hinweises auf die Patenterteilung: **19.01.2022**
(21) Anmeldenummer: 20168722.5
(22) Anmeldetag: 08.04.2020
(51) Int. Cl.: C05F 17/914, B01F 13/00, C05F 17/943

(54) **SELBSTFAHRENDE VORRICHTUNG ZUM UMSETZEN VON SCHÜTTGUT**
SELF-PROPELLED DEVICE FOR TRANSFERRING BULK MATERIAL
DISPOSITIF AUTOMATIQUE PERMETTANT DE TRANSMETTRE UN PRODUIT EN VRAC

(30) Priorität: 29.04.2019 AT 503892019
(43) Veröffentlichungstag der Anmeldung: 02.12.2020
(73) Patentinhaber: Pusch & Schinnerl GmbH, 8130 Frohnleiten (AT)
(72) Erfinder: Schinnerl, Richard, 8102 Semriach (AT); Pusch, Thomas, 8130 Frohnleiten (AT)
(74) Vertreter: Hübscher & Partner Patentanwälte GmbH

(56) Entgegenhaltungen:
- EP-A1- 1 362 772
- EP-B1- 0 671 374
- EP-B1- 0 762 999
- DE-A1- 2 655 979
- DE-A1- 19 949 425

## Beschreibung

Die Erfindung bezieht sich auf eine selbstfahrende Vorrichtung zum Umsetzen von Schüttgut, insbesondere Rottegut, umfassend ein Fahrgestell mit einer in Fahrtrichtung vorgeordneten Schüttgutaufnahme und einer in Fahrtrichtung nachgeordneten Umsetzwalze.

Die Notwendigkeit eines Wendens oder Umsetzens von Kompost um eine umfassende Versorgung diverser Mikro- sowie Makroorganismen mit Sauerstoff zu erzielen und damit durch anaerobe Bedingungen erzeugte Fäulnis zu verhindern, ist hinlänglich bekannt.

Zu diesem Zwecke werden, wie beispielsweise in der DE19832787A1 offenbart, bemannte Umsetzvorrichtungen eingesetzt, die eine einem Fahrgestell in Fahrtrichtung vorgeordnete Umsetzwalze aufweisen, welche das zu wendende Rottegut auf einen Schrägförderer aufbringt, wonach das Rottegut zu einem Querförderband transportiert und im Heckbereich seitlich der Umsetzvorrichtung wieder abgegeben wird. Da die Abgabe des Rotteguts seitlich der Umsetzvorrichtung erfolgt, erfordert das Wenden des Rotteguts einen sehr hohen Platzbedarf. Zusätzlich sind die Umsetzvorrichtungen selbst meist schwere, lärm- und ressourcenintensive Arbeitsmaschinen, wodurch sich die Arbeit für den Bediener der Umsetzvorrichtung, auch auf Grund der Geruchsbelästigung, als unangenehm erweist. Neben der Geruchsbelästigung entstehen beim Rotteprozess außerdem gesundheitsschädliche Gase, wie beispielsweise Ammoniak.

Grundsätzlich sind aus dem landwirtschaftlichen Bereich auch unbemannte Lösungen zur Erleichterung diverser Arbeiten bekannt. Die DE102012200445A1 zeigt einen autonom arbeitenden Rasenmäher. Die dort dargelegten Ausführungen sind jedoch keinesfalls für aufwändige Prozesse, wie beispielsweise ein Umsetzen von Rottegut, geeignet, da vor allem der Antrieb inklusive Getriebe durch die erhöhte Schmutz- und Fremdkörperbelastung schnell funktionsunfähig werden würde.

Die DE19949425 offenbart eine Umsetzvorrichtung für Rottegut mit einer Schüttgutaufnahme und einer zwischen zwei Schwenkarmen drehbar gelagerten Wendetrommel/Umsetzwalze, deren Antriebsmotor in ihrem Innenraum untergebracht ist.

Der Erfindung liegt somit die Aufgabe zugrunde, eine Vorrichtung zum Umsetzen von Schüttgut, insbesondere Rottegut, vorzuschlagen, die eine ressourcenschonende und für den Betreiber zeitschonende Alternative zu bisher bekannten Arbeitsmaschinen sind, ohne dabei Einbußen hinsichtlich der für Land- und Arbeitsmaschinen bekannten Robustheit hinnehmen zu müssen.

Die Erfindung löst die gestellte Aufgabe dadurch, dass die Umsetzwalze mittels eines im Innenraum der Umsetzwalze angeordneten Antriebsmotors antreibbar ist, wobei die Umsetzwalze zwischen zwei Schwenkarmen einer Umsetzwalzenaufhängung drehbar gelagert ist und wobei zur Kühlung des Antriebsmotors ein Kühlmedium über die je an eine Stirnseite der Umsetzwalze fluiddicht anschließenden Schwenkarme geführt ist.

Die selbstfahrende Vorrichtung zum Umsetzen von Schüttgut, beispielsweise Rottegut, Erden, vorzerkleinertem Müll, Klärschlamm etc., weist ein Fahrgestell mit einem Fahrantrieb auf. Der Fahrantrieb ist in einer bevorzugten Variante als elektrischer von einem Akku betriebener Fahrantrieb ausgebildet, wiewohl auch andere Energiequellen, wie eine Brennstoffzelle oder etwa ein Dieselnotstromaggregat, zum Antreiben eingesetzt werden können. Auf Grund eines Steuerungssystems, das die Position der Umsetzvorrichtung in Bezug auf ein Referenzobjekt erkennt und dementsprechend die Fahrroute und den Umsetzprozess steuert, kann die erfindungsgemäße Vorrichtung autonom und unbemannt betrieben werden. Das Fahrgestellt bildet eine Basis für diverse zum Umsetzen oder Wenden benötigte Aggregate. Dem Fahrgestell ist in Fahrtrichtung eine Schüttgutaufnahme vorgeordnet, die im einfachsten Fall eine einfache Öffnung für das zu bearbeitende Gut ausbildet, sodass dieses einer der Schüttgutaufnahme in Fahrtrichtung nachgeordneten Umsetzwalze zugänglich wird. Damit auch Schüttguthaufen, die breiter als das Fahrgestell sind, umgesetzt werden können, kann die Schüttgutaufnahme lateral an beiden Seiten Leitschaufeln ausbilden, die einen sich in Fahrtrichtung vergrößernden Aufnahmebereich aufspannen. Das Hauptarbeitsaggregat, nämlich die Umsetzwalze, ist drehbar zwischen zwei Schwenkarmen einer Umsetzwalzenaufhängung gelagert und wird von einem eigens dafür vorgesehen beispielsweise elektrischen Antriebsmotor betrieben. Erfindungsgemäß sitzt der Antriebsmotor im Innenraum der Umsetzwalze, sodass ein Kontakt zwischen dem zu bearbeitendem Gut und dem Antrieb vermieden werden kann. Damit die Lagerbelastung des Antriebsmotors minimiert werden kann, ist dieser mittels Motorkonsole unter Vermeidung einer Bewegung in Axial- und in Radialrichtung der Umsetzwalze, sowie gegen eine Verdrehung an einem der an den Innenraum der Umsetzwalze angrenzenden Schwenkarm fixiert. Vor allem beim Umsetzen von Rottegut, können je nach Wasserdampfgehalt des Rotteguts oder notwendigem Sauerstoffeintrag unterschiedliche Winkelgeschwindigkeiten der Umsetzwalze gewünscht sein. Um daher eine ausreichende Kühlung des Antriebsmotors unabhängig von dessen Umdrehungsgeschwindigkeiten zu gewährleisten, erfolgt die Kühlung erfindungsgemäß über ein Kühlmedium, das über die Schwenkarme der Umsetzwalzenaufhängung zu- und abführbar ist. Als Kühlmedium kann beispielsweise über eine Unter- oder Überdruckvorrichtung bereitgestellte Umgebungsluft fungieren, die über einen Schwenkarm dem Innenraum der Umsetzwalze zugeführt wird und über den anderen Schwenkarm diesen wieder verlässt. In einer besonders einfach zu fertigenden Ausführung der erfindungsgemäßen Vorrichtung, können die Schwenkarme Hohlprofile ausbilden, die den Antriebsmotor mit einem aus einem oberen, vom Schüttgut abgetrennten Reinbereich geförderten Kühlmedium versorgen. Auf diese Weise wird nicht nur eine unmittelbare vom Schüttgut verursachte Verschmutzung des Antriebsmotors verhindert, sondern auch eine Verschmutzung von etwaigen über ein Kühlmedium transportierten Partikeln. Die Dosierung des Kühlmittels kann dabei unabhängig von der Drehzahl des Antriebsmotors über eine separate Kühlregelung geregelt werden.

Damit die Vorrichtung sowohl bei der Lagerung, als auch im Betrieb besonders platzsparend eingesetzt werden kann, ohne dabei einen Mangel bezüglich deren Bearbeitungseffizienz zu verursachen, wird vorgeschlagen, dass das Fahrgestell einen einen Bearbeitungsbereich aufspannenden Tunnel ausbildet, in dem die Umsetzwalze zur Vermeidung eines Partikel- und Stoffaustrags aus dem Bearbeitungsbereich während des Umsetzens des Schüttguts angeordnet ist. Zufolge dieser Maßnahme können kompakte Dimensionen der erfindungsgemäßen Vorrichtung erreicht werden, die nur durch die Höhe der Schüttgutmieten bzw. durch deren Basisbreite begrenzt sind. Zudem ergibt sich der Vorteil, dass vor allem bei trockenen Bedingungen, ein beim Umsetzen bzw. Wenden des Schüttguts entstehender Partikelaustrag auf den aufgespannten Bearbeitungsbereich begrenzt wird.

Besonders bei organischem Schüttgut, beispielsweise Kompost, kann es gewünscht sein, dass nur Teile des Schüttguts umgesetzt werden sollen. Um daher die Vorrichtung an unterschiedliche Wendestrategien und/oder verschiedene Mietenhöhen anpassen zu können, empfiehlt es sich in einer besonders bevorzugten Ausführungsform der erfindungsgemäßen Vorrichtung, dass die Umsetzwalzenaufhängung schwenkbar zwischen einer Bearbeitungsstellung und einer Passierstellung am Fahrgestell, insbesondere oberhalb eines Bearbeitungsbereiches in oder über einer Bearbeitungstunneldecke gelagert ist. Hierzu kann die Umsetzwalzenaufhängung von Hydraulikzylindern unterstützt werden. Als Bearbeitungsstellung ist hierbei nicht eine einzige Stellung gemeint, sondern ein frei verstellbarer, an die Anforderungen des Schüttguts anpassbarer Bereich. In der Passierstellung soll eine Interaktion zwischen Umsetzwalze als auch deren Umsetzwalzenaufhängung und dem Schüttgut durch ein Hinaufklappen der Umsetzwalze, vorzugsweise über den Bearbeitungsbereich und das Fahrgestell hinaus, vermieden werden.

Oftmals sind bei geruchsintensiven Schwaden Abdeckungen zur Verhinderung von Geruchsemmissionen vorgesehen. Um auch den zeitintensiven Abdeckprozess weitgehend zu automatisieren, kann deckseitig am Fahrgestell eine Wickelwalze zum Manipulieren einer Abdeckung für das Schüttgut vorgesehen sein. Die von einem externen Antrieb versorgte Wickelwalze nimmt dabei eine Abdeckung, beispielsweise ein Abdeckflies, auf und wickelt dieses entweder vor dem Umsetzen oder während des Umsetzens auf die Wickelwalze auf. Ein erneutes Bedecken der Mieten mit der Abdeckung kann auf einfache Weise bei der Retourfahrt erfolgen.

Eine ungleich schnellere Variante um mit einer Abdeckung ausgestattete Schüttgutmieten umsetzen zu können, ergibt sich, wenn deckseitig am Fahrgestell wenigstens eine Führungswalze zum führenden Untergleiten einer das Schüttgut bedeckenden Abdeckung vorgesehen ist. Hierdurch wird der zeitintensive Ab- und Aufwickelprozess der Abdeckung obsolet. Erfindungsgemäß wird stattdessen während des Umsetzens des Schüttgutes die Abdeckung im Bereich der Vorrichtung entlang der dafür vorgesehenen Führungswalze, also oberhalb des Fahrgestells geführt. Durch die kompakte Ausführung der Vorrichtung und die Anordnung der Umsetzwalze innerhalb des vom Tunnel aufgespannten Bearbeitungsraumes kann ein exaktes Anheben der Abdeckung erfolgen, wodurch eine ausreichend große Durchfahrtsöffnung für die erfindungsgemäße Vorrichtung geschaffen wird. Aus demselben Grund kann die Folie wieder exakt auf die dafür vorgesehene Position abgesetzt werden. Es hat sich dabei herausgestellt, dass die Abdeckung besonders schonend angehoben und abgesetzt werden kann, wenn deckseitig zwei Führungswalzen, eine im Frontbereich und eine im Heckbereich, vorgesehen sind, wobei die Länge der quer zur Fahrtrichtung gelagerten Walzen über die Breite des Fahrgestells hinausgeht. Um eine sichere, ordnungsgemäße Abdeckung der Schwade oder Kompostmiete unmittelbar nach Durchfahrt zu gewährleisten, empfiehlt es sich, dass die Führungswalzen doppelkonisch ausgebildet sind und gegebenenfalls von Rundstahlspiralen begrenzt sind. Dadurch wird die Abdeckung während der Durchfahrt aufgespannt und ein vollflächiges, umschlagsfreies Ablegen derselbigen sichergestellt. Die Führungswalzen sind zudem höhenverstellbar, sodass eine definierte Beabstandung der Abdeckung zum Schüttgut eingestellt werden kann. Handelt es sich bei dem Schüttgut um Rottegut, kann dadurch Einfluss auf den entweichenden Volumenstrom des beim Umsetzen freiwerdenden Wasserdampfes genommen werden, sodass der Verrottungsvorgang beeinflusst werden kann.

Damit die Vorrichtung auch über unwegsames Gelände fahren kann, ohne Schäden am Fahrgestell oder Fahrantrieb hinnehmen zu müssen, wird vorgeschlagen, dass das Fahrgestell zwei lateral gegenüberliegende, über je einen Kardanwellenantrieb separat angetriebene Raupenfahrschiffe umfasst. Dies hat den Vorteil, dass die jeweiligen als beispielsweise Elektromotoren ausgeführten Antriebsmotoren an einer hohen Lage, fernab des Schüttguts, angeordnet werden können, sodass ein intensiver Kontakt zwischen empfindlichen Motorteilen und Schüttgut weitgehend verhindert wird. Besonders konstruktiv einfache Bedingungen ergeben sich, wenn jedem Raupenfahrschiff ein außerhalb des Bearbeitungsbereiches der Umsetzwalze und oberhalb des Raupenfahrschiffes am Fahrgestell angeordneter Elektromotor zugeordnet ist, der über eine Kardanwelle und ein Winkelgetriebe an das Raupenfahrschiff gekuppelt ist.

Soll der Antrieb der Vorrichtung zum Umsetzen von Schüttgut besonders kompakt gehalten werden, so empfiehlt es sich, dass das Fahrgestell zwei lateral gegenüberliegende Raupenfahrschiffe umfasst, die durch einen an einem Raupenkettenrad des jeweiligen Raupenfahrschiffes angeordneten Radnabenmotor angetrieben werden. In diesem Fall wird der in einer bevorzugten Variante elektrische Radnabenmotor größtenteils vom Raupenfahrschiff ummantelt und dadurch geschützt.

Um auch Rottemieten, deren Breite über die Breite des vom Tunnel der Vorrichtung aufgespannten Bearbeitungsbereiches hinausgehen vollständig umsetzen, wenden, beziehungsweise bearbeiten zu können, ist es zweckmäßig, dass die Schüttgutaufnahme zwei das Schüttgut lateral eingrenzende Leiträder ausbildet, wobei die Leiträder sowohl bezüglich einer horizontalen als auch einer vertikalen Schwenkachse verschwenkbar sind. Naturgemäß sind die Leiträder rotationsbeweglich gelagert, sodass während der Fahrt ein aktiver Transport des Schüttguts in den Bearbeitungsraum des Tunnels begünstigt wird, ohne dass ein eigens dafür ausgelegter Antrieb vorgesehen sein muss. Durch die Verschwenkbarkeit der Leiträder sowohl in Horizontal- als auch Vertikalrichtung kann die Schüttgutaufnahme auf variierende Rottmieten- bzw. Schwadendimensionen angepasst werden.

Der Rotteprozesses kann durch Einsatz diverser Zuschlagstoffe, wie beispielsweise Tonmehl, Kalk, Holzasche oder Wasser beeinflusst werden. Damit diese Zuschlagstoffe effizient während des Umsetzens in das Rottegut eingebracht werden kann, wird empfohlen, dass das Fahrgestell bearbeitungsbereichseitig wenigstens eine Aufnahme für eine Dosiervorrichtung zur Einbringung von Zuschlagstoffen in das Rottegut ausbildet. Die Aufnahme kann hierzu eine Öffnung aufweisen, die je nach eingesetzten Zuschlagstoff unterschiedlich ausgebildet ist. In einer alternativen Ausführungsform können der Öffnung in Abhängigkeit der Zuschlagstoffe unterschiedliche Aufsätze zum optimalen Verteilen und Eintrag der Zuschlagstoffe in das Rottegut zugeordnet sein.

In der Zeichnung ist der Erfindungsgegenstand beispielsweise dargestellt. Es zeigen
- Fig. 1: eine Perspektivenansicht der erfindungsgemäßen Vorrichtung in Passierstellung,
- Fig. 2: eine Seitenansicht derselben erfindungsgemäßen Vorrichtung in Bearbeitungsstellung,
- Fig. 3: eine aufgerissene Detailansicht einer in den Fig. 1 und 2 dargestellten Umsetzwalze,
- Fig. 4: eine schematische Seitenansicht einer erfindungsgemäßen Vorrichtung beim Unterfahren einer Abdeckung für eine Kompostmiete und
- Fig. 5: eine der Fig. 4 entsprechende Draufsicht.

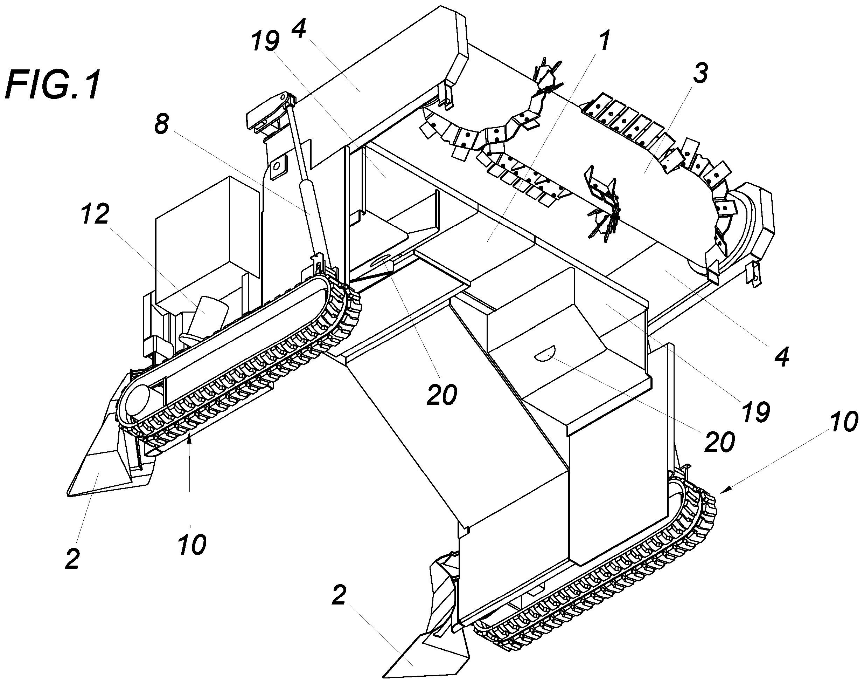

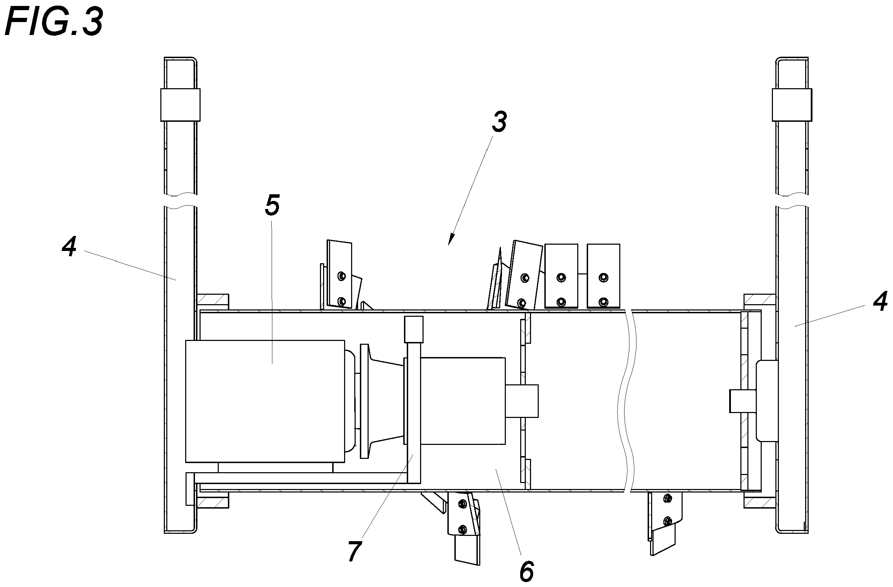

Eine erfindungsgemäße Vorrichtung weist, wie in der Fig. 1 zu sehen, ein Fahrgestell 1 auf, dem in Fahrtrichtung eine aus Leitschaufeln gebildete Schüttgutaufnahme 2 vorgelagert ist. Im Heckbereich des Fahrgestells 1 ist eine Umsetzwalze 3 angeordnet, die drehbar zwischen zwei Schwenkarmen 4 einer Umsetzwalzenaufhängung gelagert ist. In der Fig. 3 wird der Antrieb der Umsetzwalze 3 verdeutlicht. Erfindungsgemäß sitzt der Antriebsmotor 5 im Innenraum 6 der Umsetzwalze 3 und ist auf einer mit einem der Schwenkarme 4 fest verbundenen Motorkonsole 7 gegen eine Bewegung in Axial- und Radialrichtung, sowie gegen eine Verdrehung gesichert. Die Kühlung des Antriebsmotors 5 erfolgt dabei durch ein über die als Hohlprofile ausgebildeten Schwenkarme 4 zu- bzw. abgeleitetes Kühlmedium. Hierzu schließen die Schwenkarme 4 fluiddicht an die jeweiligen Stirnseiten der Umsetzwalze 3 an. Das Kühlmedium kann beispielsweise durch einen Über- oder Unterdruck geförderte Umgebungsluft sein, die von einem Reinbereich fernab des Schüttguts entnommen wird, sodass der Antriebsmotor 5 weder durch zu wendendes Schüttgut noch durch im Kühlmittel mitgeförderte Schmutzpartikel verunreinigt wird. Die Dosierung des Kühlmittels wird über eine separate Kühlregelung geregelt.

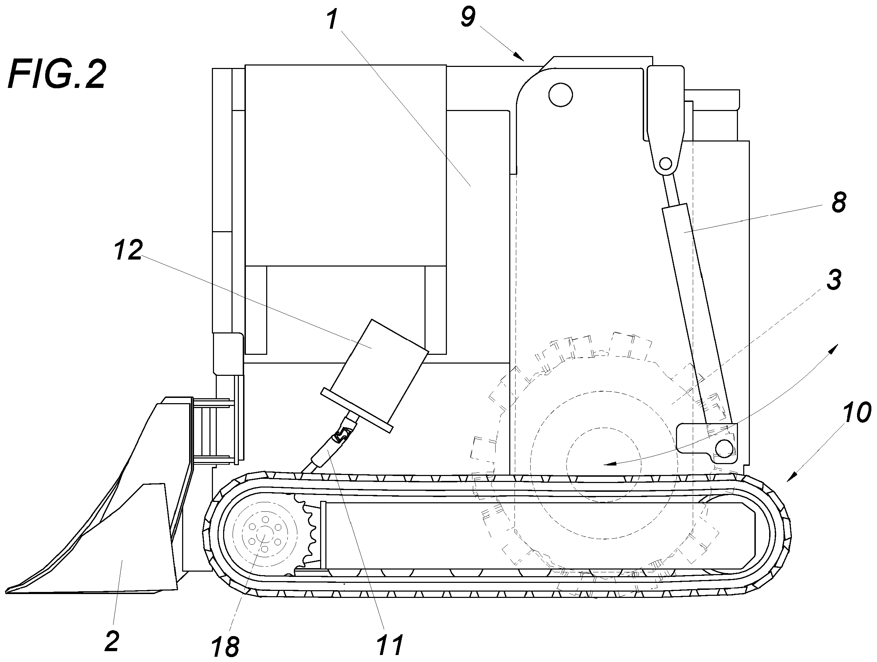

Wie weiter aus der Fig. 1 ersichtlich, ist das Fahrgestell 1 als Tunnel ausgebildet, der einen das zu bearbeitende Schüttgut umragenden Bearbeitungsbereich aufspannt. Die Schwenkarme 4 sind dabei schwenkbar zwischen einer in der Fig. 1 gezeigten Passierstellung und einer in der Fig. 2 offenbarten Bearbeitungsstellung verlagerbar. In Bearbeitungsstellung befindet sich die Umsetzwalze 3 im Bearbeitungsbereich, also innerhalb des das Schüttgut umragenden Tunnels, sodass der Austritt etwaiger beim Wenden entstehende Staubemissionen oder von dem Schüttguthaufen abrollende Schüttgutbrocken aus dem Bearbeitungsbereich größtenteils verhindert werden kann. Die Verlagerung zwischen Bearbeitungsstellung und Passierstellung wird durch Hydraulikzylinder 8 unterstützt, wodurch auch eine Verlagerung oberhalb des Bearbeitungsbereichs begünstigt wird, sodass die Umsetzwalze 3 über die Bearbeitungstunneldecke 9 (Fig. 2) hinaus verschwenkt werden kann, wie dies in der Fig. 1 angedeutet wird. Im und/oder am Tunnel, insbesondere über der Umsetzwalze 3, können diverse Leitbleche bzw. Schilde vorgesehen sein, welche die Form der Miete vorgeben und damit bestimmen.

Insbesondere den Fig. 1 und 2 ist weiter zu entnehmen, dass das Fahrgestell 1 zwei lateral gegenüberliegende Raupenfahrschiff 10 aufweist, die je durch einen über eine Kardanwelle 11 antriebsverbundenen Elektromotor 12 elektrisch versorgt werden. Dadurch kann die Vorrichtung auch unwegsames Gelände passieren. Zudem ergibt sich der Vorteil, dass die empfindlicheren Elektromotoren 12 durch die Kardanwelle 11 ausreichend vom Boden und damit von potentiellen Kontaminanten beabstandet sind. In einer kompakteren Ausführungsform kann das Raupenfahrschiff 10 auch durch einen im Raupenfahrschiff 10 angeordneten Radnabenmotor 18 (Fig. 2) angetrieben werden.

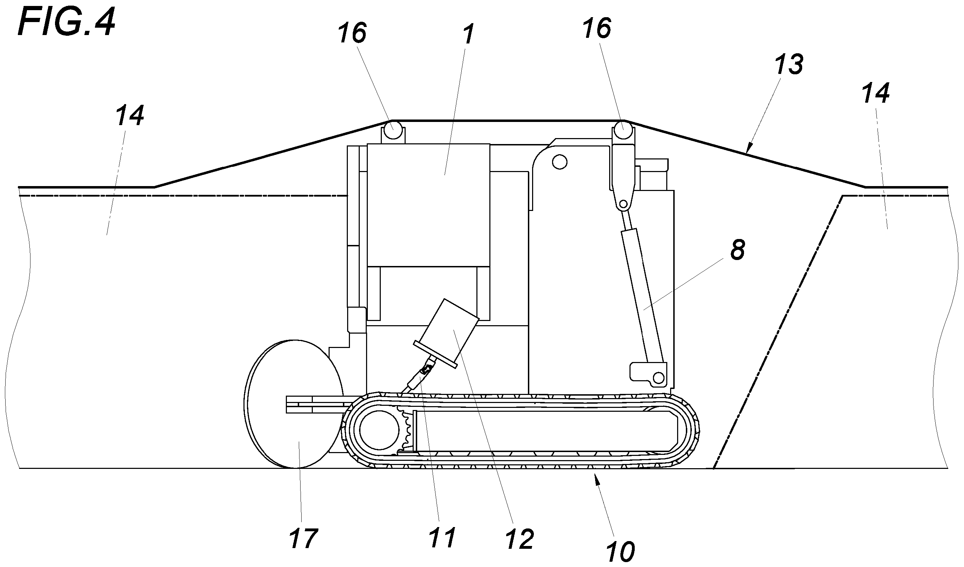

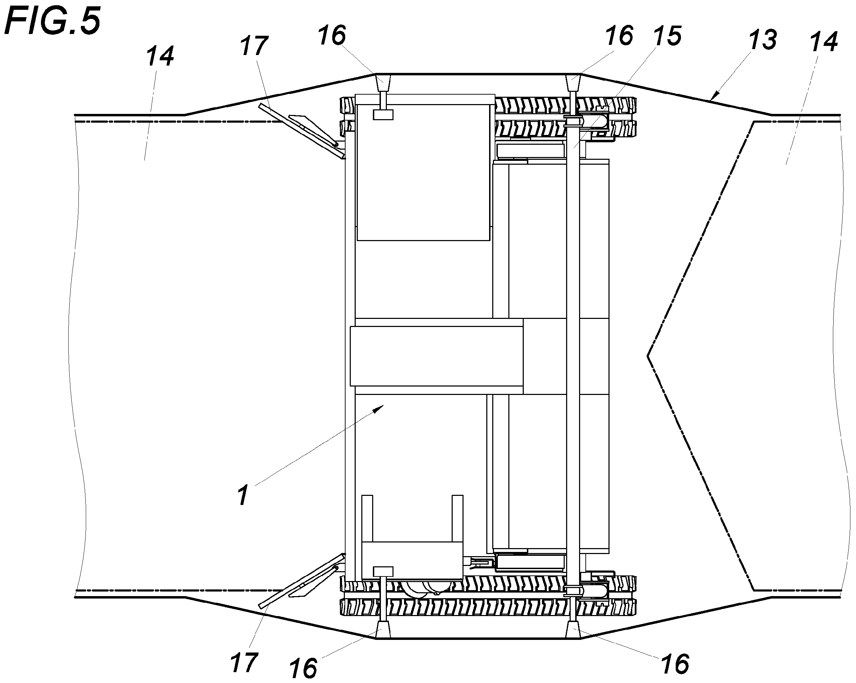

Die Fig. 4 und 5 verdeutlichen die Einsatzmöglichkeit der Vorrichtung zum Manipulieren von Abdeckungen 13, die vor allem bei geruchsintensiven Schüttgut wie Kompostmieten 14 eingesetzt werden. Dazu weist die Vorrichtung eine Wickelwalze 15 auf, die antriebsbetrieben entweder während oder vor der Überfahrt über die Kompostmieten 14 zum unterstützten Auf- und Abrollen der Abdeckung 13 eingesetzt werden kann, wodurch im Gegensatz zu einem manuellen Prozess deutlich Zeit gespart wird. Die Prozedur des Auf- und Abrollens kann jedoch auch umgangen werden, in dem die Wickelwalze 15 mit einer weiteren Walzenanordnung Führungswalzen 16 ausbilden. Dadurch kann die Abdeckung 13 während des Umsetzens angehoben werden, wodurch ein problemloses Untergleiten der kompakten Vorrichtung ermöglicht wird. Damit nach Passieren der Vorrichtung eines Rottmietenabschnitts die Abdeckung 13 ordnungsgemäß und vollflächig auf die Kompostmiete 14 abgelegte werden kann, weisen die Führungswalzen 16 und die als Führungswalzen 16 eingesetzte Wickelwalze 15 Rundstahlspiralen auf, die diese über die Breite des Fahrgestells hinaus verlängern. Dadurch wird eine Spannung der Abdeckung 13 über dem Fahrgestell 1 erzielt, wodurch die Vorrichtung einerseits genügend Platz zum Untergleiten erhält und andererseits ein Verheddern der Abdeckung 13 verhindert wird. Sowohl die Führungswalzen 16 als auch die Wickelwalze 15 sind höhenverstellbar. Dadurch kann die Beabstandung der Abdeckung 13 zur Kompostmiete 14 beim Umsetzen gesteuert und in weiterer Folge die Menge des beim Wenden entweichenden Wasserdampfes aus der Abdeckung 13 in die Umgebung beeinflusst werden.

Zur aktiven Förderung von schlecht rieselfähigem Schüttgut in den vom Fahrgestell 1 umspannten Bearbeitungsraum kann die Schüttgutaufnahme 2 auch Leiträder 17 (Figs. 4 und 5) ausbilden. Diese Leiträder 17 sind sowohl horizontal als auch vertikal verschwenkbar, wodurch auch Schüttguthaufen, deren Basisbreite über die Breite des Bearbeitungsraumes der Vorrichtung hinausgehen, bearbeitet werden können. Die Umdrehungsbewegung der Leiträder 17 wird dabei durch die Fahrtbewegung der Vorrichtung induziert, wodurch ein externer Antrieb nicht zwingend notwendig ist.

Wie weiter in der Fig. 1 zu sehen ist, bildet das Fahrgestell 1 Aufnahmen 19 für eine nicht dargestellte Dosiervorrichtung aus. Durch Öffnungen 20 der Aufnahme 19 können während des Umsetzens des Rotteguts diverse Zuschlagstoffe der Dosiervorrichtung in das Rottegut eingebracht werden.

## Patentansprüche

1. Selbstfahrende Vorrichtung zum Umsetzen von Schüttgut, insbesondere Rottegut, umfassend ein Fahrgestell (1) mit einer in Fahrtrichtung vorgeordneten Schüttgutaufnahme (2) und einer in Fahrtrichtung nachgeordneten Umsetzwalze (3), **dadurch gekennzeichnet, dass** die Umsetzwalze (3) mittels eines im Innenraum (6) der Umsetzwalze (3) angeordneten Antriebsmotors (5) antreibbar ist, wobei die Umsetzwalze (3) zwischen zwei Schwenkarmen (4) einer Umsetzwalzenaufhängung drehbar gelagert ist und wobei zur Kühlung des Antriebsmotors (5) ein Kühlmedium über die je an eine Stirnseite der Umsetzwalze (3) fluiddicht anschließenden Schwenkarme (4) geführt ist.

2. Selbstfahrende Vorrichtung zum Umsetzen von Schüttgut nach Anspruch 1, **dadurch gekennzeichnet, dass** das Fahrgestell (1) einen einen Bearbeitungsbereich aufspannenden Tunnel ausbildet, in dem die Umsetzwalze (3) zur Vermeidung eines Partikel- und Stoffaustrags aus dem Bearbeitungsbereich während des Umsetzens des Schüttguts angeordnet ist.

3. Selbstfahrende Vorrichtung zum Umsetzen von Schüttgut nach Anspruch 1 oder 2, **dadurch gekennzeichnet, dass** die Umsetzwalzenaufhängung schwenkbar zwischen einer Bearbeitungsstellung und einer Passierstellung am Fahrgestell (1), insbesondere oberhalb eines Bearbeitungsbereiches in oder über einer Bearbeitungstunneldecke (9) gelagert ist.

4. Selbstfahrende Vorrichtung zum Umsetzen von Schüttgut nach einem der Ansprüche 1 bis 3, **dadurch gekennzeichnet, dass** deckseitig am Fahrgestell (1) eine Wickelwalze (15) zum Manipulieren einer Abdeckung (13) für das Schüttgut vorgesehen ist.

5. Selbstfahrende Vorrichtung zum Umsetzen von Schüttgut nach einem der Ansprüche 1 bis 4, **dadurch gekennzeichnet, dass** deckseitig am Fahrgestell (1) wenigstens eine Führungswalze (16) zum führenden Untergleiten einer das Schüttgut bedeckenden Abdeckung (13) vorgesehen ist.

6. Selbstfahrende Vorrichtung zum Umsetzen von Schüttgut nach einem der Ansprüche 1 bis 5, **dadurch gekennzeichnet, dass** das Fahrgestell (1) zwei lateral gegenüberliegende, über je einen Kardanwellenantrieb separat angetriebene Raupenfahrschiffe (10) umfasst.

7. Selbstfahrende Vorrichtung zum Umsetzen von Schüttgut nach einem der Ansprüche 1 bis 5, **dadurch gekennzeichnet, dass** das Fahrgestell (1) zwei lateral gegenüberliegende Raupenfahrschiffe (10) umfasst, die durch einen an einem Raupenkettenrad des jeweiligen Raupenfahrschiffes (10) angeordneten Radnabenmotor (18) angetrieben sind.

8. Selbstfahrende Vorrichtung zum Umsetzen von Schüttgut nach Anspruch 6, **dadurch gekennzeichnet, dass** jedem Raupenfahrschiff (10) ein außerhalb des Bearbeitungsbereiches der Umsetzwalze (3) und oberhalb des Raupenfahrschiffes (10) am Fahrgestell (1) angeordneter Elektromotor (12) zugeordnet ist, der über eine Kardanwelle (11) und ein Winkelgetriebe an das Raupenfahrschiff (10) gekuppelt ist.

9. Selbstfahrende Vorrichtung zum Umsetzen von Schüttgut nach einem der Ansprüche 1 bis 8, **dadurch gekennzeichnet, dass** die Schüttgutaufnahme (2) zwei das Schüttgut lateral eingrenzende Leiträder (17) ausbildet, wobei die Leiträder (17) sowohl bezüglich einer horizontalen als auch einer vertikalen Schwenkachse verschwenkbar sind.

10. Selbstfahrende Vorrichtung zum Umsetzen von Schüttgut nach einem der Ansprüche 1 bis 9, **dadurch gekennzeichnet, dass** das Fahrgestell (1) bearbeitungsbereichseitig wenigstens eine Aufnahme (19) für eine Dosiervorrichtung zur Einbringung von Zuschlagstoffen in das Rottegut ausbildet.

## Claims

1. Self-propelled device for transferring bulk material, in particular rotting material, comprising a chassis (1) with a bulk material receptacle (2) arranged upstream in the direction of travel and a transfer roller (3) arranged downstream in the direction of travel, **characterised in that** the transfer roller (3) can be driven by means of a drive motor (5) arranged in the interior (6) of the transfer roller (3), wherein the transfer roller (3) is rotatably mounted between two pivot arms (4) of a transfer roller suspension and wherein, for cooling the drive motor (5), a cooling medium is guided via the pivot arms (4) which are each connected in a fluid-tight manner to one end face of the transfer roller (3).

2. Self-propelled device for transferring bulk material as claimed in claim 1, **characterised in that** the chassis (1) forms a tunnel which spans a processing region and in which the transfer roller (3) is arranged to avoid particle and material discharge from the processing region during the transfer of the bulk material.

3. Self-propelled device for transferring bulk material as claimed in claim 1 or 2, **characterised in that** the transfer roller suspension is mounted pivotably between a processing position and a passing position on the chassis (1), in particular above a processing region in or above a processing tunnel ceiling (9).

4. Self-propelled device for transferring bulk material as claimed in any one of claims 1 to 3, **characterised in that** a winding roller (15) for manipulating a cover (13) for the bulk material is provided on the deck-side of the chassis (1).

5. Self-propelled device for transferring bulk material as claimed in any one of claims 1 to 4, **characterised in that** at least one guide roller (16) for sliding, in a guiding manner, under a cover (13) covering the bulk material is provided on the deck-side of the chassis (1).

6. Self-propelled device for transferring bulk material as claimed in any one of claims 1 to 5, **characterised in that** the chassis (1) comprises two laterally opposite crawler tracks (10) which are each driven separately via a cardan shaft drive.

7. Self-propelled device for transferring bulk material as claimed in any one of claims 1 to 5, **characterised in that** the chassis (1) comprises two laterally opposite crawler tracks (10) which are driven by a wheel hub motor (18) which is arranged on a crawler sprocket of the respective crawler track (10).

8. Self-propelled device for transferring bulk material as claimed in claim 6, **characterised in that** each crawler track (10) is allocated an electric motor (12) which is arranged on the chassis (1) outside the processing region of the transfer roller (3) and above the crawler track (10) and which is coupled to the crawler track (10) via a cardan shaft (11) and an angular gear.

9. Self-propelled device for transferring bulk material as claimed in any one of claims 1 to 8, **characterised in that** the bulk material receptacle (2) forms two guide wheels (17) laterally enclosing the bulk material, wherein the guide wheels (17) are pivotable both with respect to a horizontal and a vertical pivot axis.

10. Self-propelled device for transferring bulk material as claimed in any one of claims 1 to 9, **characterised in that** the chassis (1) forms at least one receptacle (19) on the processing region side for a metering device for introducing additives into the rotting material.

## Revendications

1. Dispositif automobile pour le retournement d'une matière en vrac, en particulier d'une matière en pourrissage, comprenant un châssis (1) avec un réceptacle de matière en vrac (2) disposé à l'avant dans le sens du déplacement et un tambour de retournement (3) disposé à l'arrière dans le sens du déplacement, **caractérisé en ce que** le tambour de retournement (3) peut être entraîné par un moteur d'entraînement (5) disposé dans l'espace intérieur (6) du tambour de retournement (3), dans lequel le tambour de retournement (3) est monté de manière pivotante entre deux bras pivotants (4) d'une suspension de tambour de retournement et dans lequel, pour le refroidissement du moteur d'entraînement (5), un fluide de refroidissement est conduit par les bras pivotants (4) raccordés chacun de manière étanche au fluide à une face frontale du tambour de retournement (3).

2. Dispositif automobile pour retourner une matière en vrac selon la revendication 1, **caractérisé en ce que** le châssis (1) forme un tunnel enserrant une zone de traitement dans lequel le tambour de retournement (3), pour éviter de disperser des particules et de la matière hors de la zone de traitement, est disposé pendant le retournement.

3. Dispositif automobile pour retourner une matière en vrac selon la revendication 1 ou 2, **caractérisé en ce que** la suspension de tambour de retournement est montée de manière pivotante entre une position de traitement et une position de passage sur le châssis (1), en particulier au-dessus d'une zone de traitement dans ou sur un plafond de tunnel de traitement (9).

4. Dispositif automobile pour retourner une matière en vrac selon une des revendications 1 à 3, **caractérisé en ce que**, du côté du plafond, un rouleau de bobinage (15) est prévu sur le châssis (1) pour manipuler une couverture (13) pour la matière en vrac.

5. Dispositif automobile pour retourner une matière en vrac selon une des revendications 1 à 4, **caractérisé en ce que**, du côté du plafond, au moins un rouleau de guidage (16) est prévu sur le châssis (1) pour faire coulisser par-dessous une couverture (13) recouvrant la matière en vrac.

6. Dispositif automobile pour retourner une matière en vrac selon une des revendications 1 à 5, **caractérisé en ce que** le châssis (1) comprend deux chenilles (10) opposées l'une à l'autre latéralement, entraînées séparément chacune par une transmission à arbre à cardan.

7. Dispositif automobile pour retourner une matière en vrac selon une des revendications 1 à 5, **caractérisé en ce que** le châssis (1) comprend deux chenilles (10) opposées l'une à l'autre latéralement qui sont entraînées par un moteur-roue (18) disposé sur un rouleau à chenille de la chenille (10) correspondante.

8. Dispositif automobile pour retourner une matière en vrac selon la revendication 6, **caractérisé en ce qu'**à chaque chenille (10) est associé un moteur électrique (12) disposé sur le châssis (1), à l'extérieur de la zone de traitement du tambour de retournement (3) et au-dessus de la chenille (10), qui est accouplé à la chenille (10) par un arbre à cardan (11) et un engrenage angulaire.

9. Dispositif automobile pour retourner une matière en vrac selon une des revendications 1 à 8, **caractérisé en ce que** le réceptacle de matière en vrac (2) forme deux roues directrices (17) délimitant latéralement la matière en vrac, lesquelles roues directrices (17) sont pivotantes par aussi bien par rapport à un axe de pivotement horizontal qu'à un axe de pivotement vertical.

10. Dispositif automobile pour retourner une matière en vrac selon une des revendications 1 à 9, **caractérisé en ce que** le châssis (1) forme, du côté de la zone de traitement, au moins un réceptacle (19) pour un dispositif de dosage pour introduire des additifs dans la matière en pourrissage.
